# EUROPÄISCHE PATENTANMELDUNG

(11) **EP 3 150 981 A1**
(43) Veröffentlichungstag der Anmeldung: **05.04.2017**
(21) Anmeldenummer: 15002806.6
(22) Anmeldetag: 01.10.2015
(51) Int. Cl.: G01K 11/32, G01K 1/14

(54) **LICHTLEITERBASIERTE OBERFLÄCHENTEMPERATURMESSUNG ZUR ÜBERWACHUNG VON REFORMERAUSTRITTSYSTEMEN**

(71) Anmelder: Linde Aktiengesellschaft, 80331 München (DE)
(72) Erfinder: Flüggen, Rainer, 83673 Bichl (DE); Richardt, Carsten, 81479 München (DE); Hoffmann, Rainer, 82008 Unterhaching (DE); Golbach, Marco, 81477 Münnchen (DE); Huber, Michael, 81547 München (DE)
(74) Vertreter: Meilinger, Claudia Sabine

(57) **Zusammenfassung**

Die Erfindung betrifft ein Verfahren zum Messen einer Außentemperatur einer Rohrleitung (200), wobei ein heißes Fluid (F) durch die Rohrleitung (200) strömt und wobei die Außentemperatur mittels eines entlang der Rohrleitung (200) verlaufenden Lichtwellenleiters (100), der in thermischen Kontakt mit einer äußeren Oberfläche (200a) der Rohrleitung (200) steht, gemessen wird, wobei Licht in den Lichtwellenleiter (100) eingekoppelt wird und im Lichtwellenleiter (100) gestreutes Licht zur Ermittlung der Außentemperatur ausgewertet wird. Weiterhin betrifft die Erfindung eine entsprechende Anordnung zum Messen der Austrittstemperatur.

## Beschreibung

Die Erfindung betrifft ein Verfahren und eine Anordnung zum Messen der Außentemperatur einer Rohrleitung.

Bei einer derartigen Rohrleitung kann es sich erfindungsgemäß z.B. um ein Reformeraustrittssystem oder einen Abschnitt eines solchen Systems handeln, über das ein heißes Synthesegas aus einem oder mehreren Reaktorrohren eines Ofens abgezogen wird. Die Reaktorrohre sind dabei in einem befeuerten Ofenraum des Ofens angeordnet und mit einem Katalysator gefüllt. In den Reaktorrohren wird ein Einsatzgas erhitzt, das Wasserdampf sowie einen Kohlenwasserstoff (z.B. CH₄) aufweist, der durch Dampfreformierung in ein H₂ und CO aufweisendes Synthesegas gespalten wird. Bei der Rohrleitung kann es sich aber auch um eine andere, ein insbesondere heißes Prozessgas führende Rohrleitung handeln.

Zur Außentemperaturmessung von derartigen Reformeraustrittssystemen bzw. Rohrleitungen werden bislang in der Regel Wärmebildkameras, die z.B. ein Infrarotspektrum aufzeichnen, verwendet.

Für eine automatisierte Überwachung eines ausgedehnten Reformeraustritts- oder Rohrleitungssystems mittels einer solchen IR-Kamera ist jedoch eine komplexe mechanische Verfahreinheit nötig, da das Reformeraustrittssystem bzw. ein sonstige zu messende Rohrleitung regelmäßig nicht vollständig in einem stationären Kamerabild erfasst werden kann. Weiterhin wird zusätzliche eine zuverlässige Bildanalyse benötigt, die relevante Temperaturabweichungen erkennt, ohne von umgebungsbedingten Einflüssen (Witterung) gestört zu werden.

Hiervon ausgehend liegt der vorliegenden Erfindung daher die Aufgabe zu Grunde, ein Verfahren und eine entsprechende Anordnung bzw. Einrichtung zum Messen einer Außentemperatur einer Rohrleitung zu schaffen, die im Hinblick auf die vorgenannte Problematik verbessert ist.

Dieses Problem wird durch ein Verfahren mit den Merkmalen des Anspruchs 1 gelöst. Vorteilhafte Ausgestaltung des Verfahrens sind in den entsprechenden Unteransprüchen angegeben und werden nachfolgend beschrieben.

Gemäß Anspruch 1 ist ein Verfahren zum Messen einer Außentemperatur einer Rohrleitung vorgesehen, wobei ein (vorzugsweise heißes) Fluid durch die Rohrleitung strömt, und wobei die Außentemperatur mittels eines entlang der Rohrleitung verlaufenden Lichtwellenleiters gemessen wird, der mit einer äußeren Oberfläche der Rohrleitung in thermischen Kontakt steht, wobei Licht in den Lichtwellenleiter eingekoppelt wird und im Lichtwellenleiter gestreutes Licht zur Ermittlung der Außentemperatur ausgewertet wird. Grundsätzlich können natürlich auch mehrere Lichtwellenleiter in der gleichen Weise verwendet werden. Bei dem Lichtwellenleiter handelt sich bevorzugt um eine Glasfaser oder einen sonstigen faserförmigen Lichtwellenleiter.

Dadurch, dass der Lichtwellenleiter in thermischen Kontakt mit der Rohrleitung steht, kann mittels des Lichtwellenleiters die Außentemperatur der Rohrleitung, d.h. die Temperatur der besagten Oberfläche der Rohrleitung, bestimmt werden. Hierbei ist es möglich (siehe auch unten), zwischen dem Lichtwellenleiter und der äußeren Oberfläche bzw. Außenseite der Rohrleitung einen Wärmewiderstand, z.B., in Form einer Materialschicht anzuordnen, so dass die tatsächlich gemessene Temperatur niedriger sein kann (z.B. um einen konstanten Betrag) als die eigentliche Temperatur der Oberfläche. Auch diese niedrigere, gemessene Temperatur wird hierein als Außentemperatur verstanden. Dies hat den Vorteil, dass für den Lichtwellenleiter ggf. Materialien verwendet werden können, die bei höheren Temperaturen nicht eingesetzt werden können. Auf die eigentliche Oberflächentemperatur kann in einfacher Weise zurückgeschlossen werden, da die thermischen Eigenschaften der Materialschicht bekannt sind.

Da bei der Temperaturmessung mittels des Lichtwellenleiters entlang des Lichtwellenleiters eine Vielzahl von dicht beieinanderliegenden Messorten existiert, in denen jeweils eine Temperatur durch Auswertung der von diesem Messort zurückgestreuten Lichtes erhalten werden kann, kann durch entsprechendes Verlegen des mindestens einen Lichtwellenleiters eine dreidimensionale Temperaturverteilung gemessen bzw. berechnet werden, die die Außentemperatur auf der dreidimensionalen Oberfläche bzw. Außenseite der Rohrleitung quasi kontinuierlich angeben kann. Unter einer Verteilung der Außentemperatur auf der Oberfläche der Rohrleitung wird also im Sinne der Erfindung die Außentemperatur in Abhängigkeit vom Ort auf der Oberfläche der Rohrleitung verstanden.

Gemäß einer Ausführungsform des erfindungsgemäßen Verfahrens bzw. der erfindungsgemäßen Anordnung (siehe unten) ist vorgesehen, dass der Lichtwellenleiter zum Messen der besagten Außentemperatur mit einer Messeinrichtung gekoppelt ist, die vorzugsweise dazu ausgebildet ist bzw. dazu verwendet wird, in den Lichtwellenleiter Licht bzw. optische Signale einzuleiten und in den Lichtwellenleiter zurückgestreutes Licht in bekannter Weise auszuwerten. Hierbei wird ausgenutzt, dass die in dem Lichtwellenleiter eingesandten und zurückgestreuten optischen Signale stark temperaturabhängig und daher zur Temperaturmessung in der Umgebung des Lichtwellenleiters geeignet sind. Zur Auswertung solcher optischen Signale des Lichtleiters existieren mehrere Verfahrensweisen, die es erlauben, die Temperatur an einem beliebigen Punkt des Lichtleiters mit ausreichend hoher Präzision zu bestimmen.

In einer bevorzugten Ausführungsform des erfindungsgemäßen Verfahrens/Anordnung ist die Messeinrichtung dazu eingerichtet und vorgesehen, durch den mindestens einen Lichtwellenleiter zurückgestreutes Licht auszuwerten, das durch Raman-Streuung des in den Lichtleiter eingeleiteten Lichtes entsteht. Hierbei wird ausgenutzt, dass Lichtwellenleiter in der Regel aus dotiertem Quarzglas (amorphe FestKörperstruktur, bestehend hauptsächlich aus Siliziumdioxid) gefertigt sind. In derartigen amorphen Festkörperstrukturen werden über thermische Effekte Gitterschwingungen induziert. Solche Gitterschwingungen sind temperaturabhängig. Licht, welches auf die Moleküle bzw. Partikel im Lichtleiter trifft, tritt daher in Wechselwirkung mit den Elektronen der Moleküle. Diese Wechselwirkung wird auch als Ramanstreuung bezeichnet. Das zurückgestreute Licht lässt sich in drei spektrale Gruppen einteilen. Neben der Rayleigh-Streuung, welche der Wellenlänge des eingestrahlten Lichts entspricht, existieren die sogenannte Stokes- und die sogenannten Anti-Stokes-Komponenten. Im Gegensatz zu den zu höheren Wellenlängen verschobenen und nur gering temperaturabhängigen Stokes-Komponenten sind die zu kleineren Wellenlängen verschoben Anti-Stokes-Komponenten deutlich temperaturabhängig. Die Messeinrichtung ist daher vorzugsweise dazu ausgebildet, das Intensitätsverhältnis zwischen Stokes- und Anti-Stokes-Komponenten zu berechnen, wobei die Messeinrichtung vorzugsweise dazu ausgebildet ist, hierzu eine Fourier-Transformation dieser beiden rückgestreuten Komponenten zu berechnen und mit einer Fourier-Transformation eines Referenzsignals zu vergleichen. Hieraus erhält man die Intensitäten der beiden Komponenten über der Länge des Lichtwellenleiters. Somit kann über den Vergleich der beiden Intensitäten die Temperatur für jeden Punkt des Lichtwellenleiters ermittelt werden.

Gemäß einer weiteren Variante des erfindungsgemäßen Verfahrens/Anordnung ist vorgesehen, dass die Temperaturbestimmung durch Auswertung der Rayleigh-Streuung erfolgt. Hierzu weist die Messeinrichtung bevorzugt ein kohärentes Frequenzbereichsreflektometer (c-OFDR für coherent Optical Frequency Domain Reflectometer) auf, bei dem Licht eines durchstimmbaren Lasers in ein Mach-Zehnder-Interferometer eingekoppelt wird, das das Licht auf zwei Strecken aufteilt, wobei der Lichtwellenleiter die eine Strecke bildet und die andere Strecke eine Referenzstrecke bekannte Länge ist. Das Rayleigh-Streulicht aus dem Lichtwellenleiter wird mit dem Lichtanteil aus der Referenzstrecke überlagert und detektiert. Beim Durchstimmen der Laserwellenlänge entsteht dabei am Detektor ein periodisches Signal, dessen Frequenz vom jeweiligen Streuort des Lichtwellenleiters abhängt. Die einzelnen Frequenzen dieses Signals, die über eine Fourier-Transformation erhältlich sind, entsprechen somit den Streuorten in dem Lichtwellenleiter; die Amplitude ihres Frequenzanteils gibt die Intensität der jeweiligen Reflexion an.

Die Rayleigh-Strahlung in einem Lichtwellenleiter, wie zum Beispiel einer Glasfaser, entsteht durch elastische Streuprozesse an lokalen Effekten/Störungen des Lichtwellenleiters. Wird eine solche Glasfaser mittels c-OFDR abgetastet, ergibt sich ein für die Glasfaser charakteristischer, fluktuierender Intensitätsverlauf der Rayleigh-Streuung entlang der Glasfaser, der bei einer Temperaturänderung (Änderung der räumlichen Ausdehnung der Faser) räumlich gestreckt bzw. gestaucht wird, wodurch die Temperatur entlang der Glasfaser berechnet werden kann. Die Messeinrichtung ist entsprechend bevorzugt konfiguriert, das Signal entlang der Glasfaser in benachbarte Segmente zu zerlegen und das entsprechende Signal in den Frequenzraum zu transformieren. Für jedes Segment ergibt sich dabei ein fluktuierendes Reflexionsmuster in Abhängigkeit von der Frequenz. Änderung der Temperatur bzw. Dehnung der Glasfaser bedingen eine Frequenzverschiebung, die insbesondere proportional zur Temperaturänderung der Glasfaser in jeweiligem Segment ist. Die Messeinrichtung ist entsprechend bevorzugt dazu ausgebildet, an Hand der jeweiligen Frequenzverschiebung die (lokale) Temperatur der Glasfaser bzw. des Lichtwellenleiters zu ermitteln.

In einer weiteren Ausführungsform des erfindungsgemäßen Verfahrens/Anordnung erfolgt die Temperaturmessung über die Auswertung von optischen Signalen, wie sie durch Brillouin-Streuung des Lichtwellenleiters entstehen. In diesem Fall basiert die Temperaturmessung auf der ortsaufgelösten Bestimmung der Referenzfrequenz zwischen der in den Lichtwellenleiter eingeleiteten, primären Lichtwelle und der durch die in Folge von Brillouin-Streuung im Lichtleiter induzierten und zurückgestreuten Welle, welche in ihrer Frequenz in Abhängigkeit von der Temperatur gegenüber der Primärwelle verringert ist. Die Messeinrichtung ist daher vorzugsweise dazu ausgebildet, eine pulsförmige Primärlichtwelle in dem Lichtleiter einzuleiten und das rückgestreute Licht zeitaufgelöst für verschiedene Frequenzdifferenzen zu detektieren und unter Kenntnis der Pulslaufzeit die Frequenzverschiebung auf Grund der Temperaturveränderung ortsaufgelöst zu bestimmen. Auch in dieser Ausgestaltung der Erfindung lässt sich also durch die Auswertung der (rückgestreuten) optischen Signale die Temperatur an jedem beliebigen Punkt des Lichtwellenleiters bestimmen.

In einer weiteren Ausführungsform des erfindungsgemäßen Verfahrens/Anordnung ist vorgesehen, die Temperatur über die Auswertung von optischen Signalen, wie sie durch Streuung am Bragg-Gitter entstehen, zu messen. Bragg-Gitter sind in den Lichtwellenleiter eingeschriebene, optische Bandfilter, welche nahezu beliebig oft im Lichtwellenleiter platziert werden können. Die Mittenwellenzahl des Bandstopps ergibt sich dabei aus der Bragg-Bedingung. Die spektrale Breite des Bandstopps hängt neben der Gitterlänger und der Brechzahl von der Temperatur ab. Die Messeinrichtung ist dann entsprechend dazu ausgebildet, bei gegebener und über den Lichtwellenleiter verschiedener Gitterlänge und Brechzahl die Temperatur an der jeweiligen Stelle des Bragg-Gitters über die Breite des Bandstopps zu bestimmen.

Gemäß einer bevorzugten Ausführungsform der Erfindung ist vorgesehen, dass die insbesondere durch das Fluid sowie ggf. durch weitere Einflüsse bedingte, zu messende Außentemperatur im Bereich von -50°C bis 700 °C liegt, vorzugsweise im Bereich von -50°C bis 350°C. Weiterhin kann das Fluid gemäß einer Ausgestaltung der Erfindung ein durch Dampfreformation erzeugtes Synthesegas aufweisen.

Gemäß einer Ausführungsform des erfindungsgemäßen Verfahrens ist bevorzugt vorgesehen, dass der Lichtwellenleiter zumindest abschnittsweise helikal um die Rohrleitung gewickelt ist. Hierbei kann die Steigung einer entsprechenden durch den Lichtwellenleiter gebildeten Helix (oder Schraubenlinie) konstant sein oder auch variieren.

Weiterhin kann der Radius der Helix konstant sein oder variieren (z.B. wenn der Radius der Rohrleitung sich ändert). Weiterhin kann die Helix bzw. Schraubenlinie rechts- oder linksgängig sein.

Sofern die Rohrleitung Richtungsänderungen entlang ihrer Längserstreckung bzw. Längsachse aufweist, kann die Helix bzw. der Lichtwellenleiter diesen Richtungsänderungen folgen.

Vorzugsweise ist gemäß einer Ausführungsform der Erfindung vorgesehen, dass der Lichtwellenleiter auf einer Strecke von 15m entlang der Rohrleitung zumindest einmal, insbesondere zumindest zweimal, insbesondere zumindest dreimal um die Rohrleitung (vorzugsweise helikal) gewickelt ist.

Weiterhin ist gemäß einer bevorzugten Ausführungsform des erfindungsgemäßen Verfahrens, wie bereits angedeutet, vorgesehen, dass mittels des Lichtwellenleiters eine dreidimensionale Verteilung der Außentemperatur auf der Oberfläche der Rohrleitung gemessen bzw. aus den Messwerten berechnet wird.

Weiterhin ist gemäß einer bevorzugten Ausführungsform des erfindungsgemäßen Verfahrens vorgesehen, dass die Rohrleitung eine innenseitige Isolierung aufweist. D.h. dass die Rohrleitung einen Innenraum umgibt, der von einer dem Innenraum zugewandten Innenseite der Rohrleitung begrenzt ist, wobei die Isolierung im Innenraum an der Innenseite angeordnet ist. Die Isolierung kann gegenüber einem in der Rohrleitung strömenden Fluid wiederum durch eine weitere Materialschicht abgeschirmt sein.

Gemäß einer bevorzugten Ausführungsform des erfindungsgemäßen Verfahrens besteht die Isolierung aus einer Keramik oder weist eine solche Keramik auf.

Weiterhin ist gemäß einer besonders bevorzugten Ausführungsform des erfindungsgemäßen Verfahrens vorgesehen, dass die Außentemperatur bzw. die Verteilung der Außentemperatur auf der Oberfläche der Rohrleitung gemessen wird, um die besagte Isolierung auf Schäden zu überwachen, wobei vorzugsweise lokale Temperaturmaxima der Außentemperatur auf der Oberfläche der Rohrleitung detektiert werden, und wobei, wenn ein lokales Temperaturmaximum der Außentemperatur einen vordefinierten Wert überschreitet, auf einen Schaden der Isolierung geschlossen wird, wobei es sich bei einem solchen Schaden um eine Schwächung der Isolierung handeln kann, eine durchlässige Öffnung in der Isolierung, einen Riss in der Isolierung oder einen Bereich der Isolierung mit einer reduzierten Dicke gegenüber eine Umgebung dieses Bereiches. Vorzugsweise wird ein Durchströmen des Fluides durch die Rohrleitung unterbrochen, wenn auf einen Schaden der Isolierung geschlossen wird.

Weiterhin ist gemäß einer bevorzugten Ausführungsform des erfindungsgemäßen Verfahrens vorgesehen, dass die Rohrleitung eine Rohrleitung eines Reformeraustrittssystems ist, über das das heiße Fluid, das vorzugsweise ein Synthesegas aufweist, aus zumindest einem Reaktorrohr eines Ofens abgezogen wird, wobei vorzugsweise das Synthesegas durch Dampfreformation in dem mindestens einen Reaktorrohr erzeugt wurde.

Ein derartiger Ofen weist vorzugsweise eine Mehrzahl solcher Reaktorrohre auf, die parallel zueinander sowie vertikal in einem Ofenraum des Ofens verlaufen können, wobei die Reaktorrohre erhitzt werden, beispielsweise indem im Ofenraum ein Brennstoff verbrannt wird. Hierdurch wird in den Reaktorrohren eine für die Dampfreformation notwendige Hitze erzeugt, so dass Wasserdampf und ein Kohlenwasserstoff (z.B. CH₄) in Gegenwart eines geeigneten Katalysators in dem jeweiligen Reaktorrohr zu einem heißen Fluid umgesetzt werden können, das ein Synthesegas (H₂ und CO) enthält.

Weiterhin ist gemäß einer bevorzugten Ausführungsform des erfindungsgemäßen Verfahrens vorgesehen, dass die besagte Rohrleitung eine oder mehrere der folgenden Komponenten aufweist:
- zumindest einen vorzugsweise außerhalb und/oder unterhalb des Ofens verlaufenden Rohrleitungsabschnitt, der das mindestens eine Reaktorrohr des Ofens mit einem ersten Sammler des Reformeraustrittssystems verbindet,
- einen ersten Sammler des Reformeraustrittssystems, der sich vorzugsweise an den mindestens einen Rohrleitungsabschnitt anschließt,
- einen zweiten Sammler des Reformeraustrittsystems, der vorzugsweise über den ersten Sammler in Strömungsverbindung mit dem mindestens einen Rohrleitungsabschnitt bzw. dem zugeordneten Reaktorrohr steht.

Vorzugsweise verlaufen die ersten Sammler horizontal bzw. senkrecht zu den Reaktorrohren und münden in den ebenfalls vorzugsweise horizontal verlaufenden zweiten Sammler ein.

Der Lichtwellenleiter (oder ggf. auch mehrere Lichtwellenleiter) kann also entlang der besagten Rohrleitungsabschnitte verlaufen, die jeweils ein Reaktorrohr mit einem ersten Sammler (auch outlet manifold genannt) verbinden, wobei der mindestens eine Lichtleiter vorzugsweise helikal um diese Rohrleitungsabschnitte gewickelt ist. Insbesondere kann für jeden Rohrleitungsabschnitt ein Lichtwellenleiter vorgesehen werden.

Weiterhin kann der Lichtwellenleiter (oder ggf. auch mehrere Lichtwellenleiter) auch entlang des ersten Sammlers verlaufen, wobei der mindestens eine Lichtleiter vorzugsweise helikal um den ersten Sammler gewickelt ist.

Das Reformeraustrittssystem kann weiterhin mehrere, vorzugsweise parallel zueinander verlaufenden erste Sammler aufweisen, in die jeweils die besagten Rohrleitungsabschnitte einmünden bzw. die jeweils über einen solchen Rohrleitungsabschnitt mit einem zugeordneten Reaktorrohr verbunden sind. Diese Rohrleitungsabschnitte werden auch pigtails genannt.

Der Lichtwellenleiter (oder ggf. auch mehrere Lichtwellenleiter) kann weiterhin entlang mehrerer oder entlang aller erster Sammler verlaufen, wobei der mindestens eine Lichtwellenleiter vorzugsweise helikal um die ersten Sammler gewickelt ist. Insbesondere kann für jeden ersten Sammler ein Lichtwellenleiter vorgesehen werden.

Der bzw. die ersten Sammler münden vorzugsweise in den zweiten Sammler ein, der bevorzugt quer zu den ersten Sammlern verläuft. Der zweite Sammler wird daher auch insbesondere als cross collector bezeichnet.

Der Lichtwellenleiter (oder ggf. auch mehrere Lichtwellenleiter) kann weiterhin auch entlang dieses zweiten Sammlers verlaufen, wobei der mindestens eine Lichtwellenleiter vorzugsweise helikal um den zweiten Sammler gewickelt ist.

Auf diese Weise kann die Außentemperatur von beliebigen Bereichen der äußeren Oberfläche des Reformeraustrittssystems gemessen werden. Insbesondere kann die gesamte äußere Oberfläche des Reformeraustrittssystems, d.h., die äußere Oberfläche der Rohrleitungsabschnitte, die die Reaktorrohre mit einem ersten Sammler verbinden, die äußere Oberfläche dieser ersten Sammler, sowie die äußere Oberfläche des zweiten Sammlers gemessen bzw. überwacht werden. Natürlich kann die Außentemperaturmessung auch auf einzelne Bereiche, wie z.B. die Rohrleitungsabschnitte, die ersten Sammler oder die zweiten Sammer beschränkt werden.

Weiterhin ist gemäß einer bevorzugten Ausführungsform des erfindungsgemäßen Verfahrens vorgesehen, dass der Lichtwellenleiter in einer Metallhülse angeordnet ist, die den Lichtwellenleiter im Querschnitt umgibt. Die Metallhülse kann z.B. aus einem Stahl, insbesondere Edelstahl, bestehen.

Weiterhin ist gemäß einer bevorzugten Ausführungsform des erfindungsgemäßen Verfahrens vorgesehen, dass die Metallhülse eine Wandung aufweist, die eine Dicke im Bereich von 0,2 mm bis 0,5 mm aufweist und/oder einen Außendurchmesser im Bereich von 2mm bis 3mm.

Weiterhin ist gemäß einer bevorzugten Ausführungsform des erfindungsgemäßen Verfahrens vorgesehen, dass die Metallhülse zum Befestigen des Lichtwellenleiters an der Rohrleitung an einer Außenseite der Rohrleitung festgelegt ist, und zwar bevorzugt indem die Metallhülse mittels eines Klebstoffs auf die äußere Oberfläche der Rohrleitung geklebt wird.

Weiterhin ist gemäß einer bevorzugten Ausführungsform des erfindungsgemäßen Verfahrens vorgesehen, dass die Metallhülse in einem Schlauch, vorzugsweise in einem Gewebeschlauch, geführt ist, um insbesondere einem Knicken der Metallhülse entgegen zu wirken. Hierzu liegt der Schlauch mit einer Innenseite vorzugsweise eng an einer Außenseite der Metallhülse an. Hierdurch kann die Metallhülse gebogen werden, wobei das Risiko der Erzeugung eines Knicks gemindert wird.

Gemäß einer weiteren Ausführungsform des erfindungsgemäßen Verfahrens ist vorgesehen, dass der Schlauch zum Festlegen des Lichtwellenleiters an der äußeren Oberfläche der Rohrleitung mittels eines Klebstoffes auf die äußere Oberfläche der Rohrleitung geklebt ist.

Weiterhin ist gemäß einer bevorzugten Ausführungsform des erfindungsgemäßen Verfahrens vorgesehen, dass eine jeweils zum Festkleben der Metallhülse oder des Schlauchs verwendete Klebstoffverbindung bzw. Klebstoffschicht eine Dicke aufweist, derart, dass die Klebstoffschicht einen definierten Wärmewiderstand ausbildet. Vorzugsweise liegt die Dicke einer solchen Material- bzw. Klebstoffschicht im Bereich von 1 mm bis 5 mm. Hierdurch kann ein Temperaturgradient durch die Klebstoffschicht etabliert werden, so dass die nunmehr gemessene Temperatur um einen konstanten Betrag niedriger ist, als die tatsächliche Oberflächentemperatur der Rohrleitung. Dies ermöglicht auch den Einsatz von temperaturempfindlicheren Lichtwellenleitern.

Gemäß einer Ausführungsform des erfindungsgemäßen Verfahrens kann der Klebstoff, der für die oben beschriebenen Klebstoffverbindungen bzw. Klebstoffschichten vorzugsweise verwendet wird, ein Polyimid aufweisen.

Weiterhin wird die der Erfindung zugrundeliegende Aufgabe durch einen Anordnung zum Messen einer Außentemperatur einer Rohrleitung gelöst.

Dabei weist die Anordnung zumindest auf: eine Rohrleitung, deren Außentemperatur zu messen ist, einen Lichtwellenleiter, der entlang der Rohrleitung verläuft, eine mit dem Lichtwellenleiter verbundene Messeinrichtung, die dazu ausgebildet ist, Licht in den mindestens einen Lichtwellenleiter einzukoppeln und in dem mindestens einen Lichtwellenleiter gestreutes Licht zur Ermittlung der Außentemperatur auszuwerten. Bei dem Lichtwellenleiter handelt es sich bevorzugt um eine Glasfaser oder einen sonstigen faserförmigen Lichtwellenleiter. Die Messung der Außentemperatur mittels der Messeinrichtung kann insbesondere nach den oben bereits beschriebenen Messprinzipien oder einem sonstigen geeigneten Verfahren vorgenommen werden (das gilt auch für das erfindungsgemäße Verfahren). Grundsätzlich kann die Anordnung auch mehrere Lichtwellenleiter oder Glasfasern verwenden (siehe auch oben).

Weiterhin ist gemäß einer bevorzugten Ausführungsform der erfindungsgemäßen Anordnung vorgesehen, dass die Rohrleitung dazu konfiguriert ist, ein Fluid mit einer Temperatur zu führen, derart, dass die zu messende Außentemperatur im Bereich von -50°C bis 700°C, vorzugsweise im Bereich von -50°C bis 350°C liegt.

Weiterhin ist gemäß einer bevorzugten Ausführungsform der erfindungsgemäßen Anordnung vorgesehen, dass der Lichtwellenleiter zumindest abschnittsweise helikal um die Rohrleitung gewickelt ist (dies kann in der oben bereits beschriebenen Weise ausgeführt sein).

Weiterhin ist gemäß einer bevorzugten Ausführungsform der erfindungsgemäßen Anordnung vorgesehen, dass die Rohrleitung eine innenseitige Isolierung aufweist, wobei die Isolierung vorzugsweise eine Keramik aufweist.

Weiterhin ist gemäß einer bevorzugten Ausführungsform der erfindungsgemäßen Anordnung vorgesehen, dass die Rohrleitung eine Rohrleitung eines Reformeraustrittssystems ist, über das das heiße Fluid, das vorzugsweise ein Synthesegas aufweist, aus einem Reaktorrohr eines Ofens abgezogen wird, wobei vorzugsweise das Synthesegas durch Dampfreformation in dem Reaktorrohr erzeugt wurde.

Weiterhin ist gemäß einer bevorzugten Ausführungsform der erfindungsgemäßen Anordnung vorgesehen, dass die Rohrleitung eine oder mehrere der folgenden Komponenten aufweist:
- zumindest einen vorzugsweise außerhalb und/oder unterhalb des Ofens verlaufenden Rohrleitungsabschnitt, der das mindestens eine Reaktorrohr des Ofens mit einem ersten Sammler des Reformeraustrittssystems verbindet,
- einen ersten Sammler des Reformeraustrittssystems, der sich vorzugsweise an den mindestens einen Rohrleitungsabschnitt anschließt,
- einen zweiten Sammler des Reformeraustrittsystems, der vorzugsweise über den ersten Sammler in Strömungsverbindung mit dem mindestens einen Rohrleitungsabschnitt oder dem zugeordneten Reaktorrohr steht.

Die Reaktorrohre, Rohrleitungsabschnitte, ersten Sammler sowie der zweite Sammler können in der oben beschriebenen Weise zueinander angeordnet sein.

Der mindestens eine Lichtwellenleiter kann insbesondere auf die oben bereits im Rahmen des erfindungsgemäßen Verfahrens beschriebenen Weisen bezüglich der Rohrleitungsabschnitte und Sammler angeordnet sein.

Weiterhin ist gemäß einer bevorzugten Ausführungsform der erfindungsgemäßen Anordnung vorgesehen, dass der Lichtwellenleiter in einer Metallhülse angeordnet ist, die den Lichtwellenleiter im Querschnitt umgibt. Die Metallhülse kann z.B. aus einem Stahl, insbesondere Edelstahl, bestehen.

Weiterhin ist gemäß einer bevorzugten Ausführungsform der erfindungsgemäßen Anordnung vorgesehen, dass die Metallhülse eine Wandung aufweist, die eine Dicke im Bereich von 0,2 mm bis 0,5 mm aufweist und/oder einen Außendurchmesser im Bereich von 2mm bis 3mm.

Weiterhin ist gemäß einer bevorzugten Ausführungsform der erfindungsgemäßen Anordnung vorgesehen, dass die Metallhülse zum Befestigen des Lichtwellenleiters an der Rohrleitung an einer Außenseite der Rohrleitung festgelegt ist, und zwar bevorzugt, indem die Metallhülse mittels eines Klebstoffs bzw. einer auf der äußeren Oberfläche angeordneten Klebstoffschicht auf die äußere Oberfläche der Rohrleitung geklebt ist. Weiterhin ist gemäß einer bevorzugten Ausführungsform der erfindungsgemäßen Anordnung vorgesehen, dass die Metallhülse in einem Schlauch, vorzugsweise in einem Gewebeschlauch, geführt ist, um insbesondere ein Knicken der Metallhülse zu erschweren. Hierzu liegt der Schlauch mit einer Innenseite vorzugsweise eng an einer Außenseite der Metallhülse an.

Gemäß einer weiteren Ausführungsform der erfindungsgemäßen Anordnung ist vorgesehen, dass der Schlauch zum Festlegen des Lichtwellenleiters an der äußeren Oberfläche der Rohrleitung mittels eines Klebstoffes bzw. mittels einer auf der äußeren Oberfläche der Rohrleitung angeordneten Klebstoffschicht auf die äußere Oberfläche der Rohrleitung geklebt ist.

Weiterhin ist gemäß einer bevorzugten Ausführungsform der erfindungsgemäßen Anordnung vorgesehen, dass die jeweils zum Festkleben der Metallhülse oder des Schlauchs verwendete Klebstoffschicht eine Dicke aufweist, derart, dass die Klebstoffschicht einen definierten Wärmewiderstand ausbildet. Vorzugsweise liegt die Dicke einer solchen Material- bzw. Klebstoffschicht im Bereich von 1 mm bis 5 mm. Hierdurch kann, wie oben bereits beschrieben, ein Temperaturgradient durch die Klebstoffschicht etabliert werden, so dass die nunmehr gemessene Temperatur um einen konstanten Betrag niedriger ist, als die tatsächliche Oberflächentemperatur der Rohrleitung. Dies ermöglicht den Einsatz vergleichsweise temperaturempfindlicherer Lichtwellenleiter.

Gemäß einer Ausführungsform der erfindungsgemäßen Anordnung kann der Klebstoff, der für die oben beschriebenen Klebstoffverbindungen bzw. Klebstoffschichten vorzugsweise verwendet wird, ein Polyimid aufweisen.

Weitere Merkmale und Vorteile der Erfindung sollen bei den nachfolgenden Figurenbeschreibungen von Ausführungsbeispielen der Erfindung anhand der Figuren erläutert werden. Es zeigen:
- Fig. 1: eine schematische Ansicht eines Reformeraustrittsystems mit einem Lichtwellenleiter zum Messen einer Außentemperatur des Reformeraustrittssystems;
- Fig. 2: eine geschnittene Ansicht einer Variante der Befestigung des Lichtwellenleiters an der Oberseite einer Rohrleitung des Reformeraustrittssystems gemäß Figur 1;
- Fig. 3: eine geschnittene Ansicht einer weitere Variante der Befestigung des Lichtwellenleiters an der Oberseite einer Rohrleitung des Reformeraustrittssystems gemäß Figur 1; und
- Fig. 4: eine geschnittene Ansicht einer weitere Variante der Befestigung des Lichtwellenleiters an der Oberseite einer Rohrleitung des Reformeraustrittssystems gemäß Figur 1.

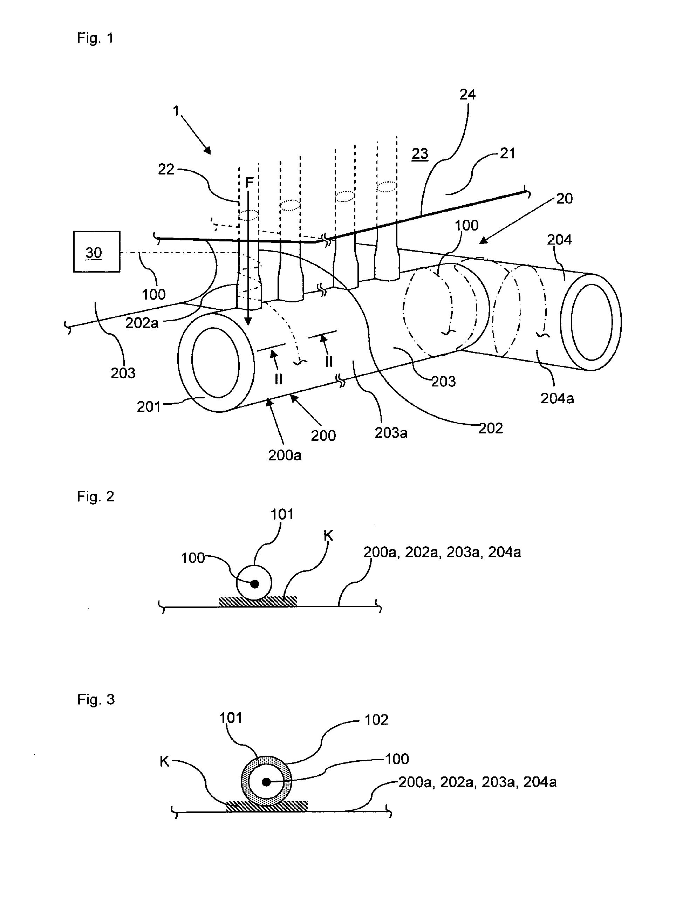

Fig. 1 zeigt eine verzweigte Rohrleitung 200 eines Reformeraustrittssystems 20. Über dieses Austrittssystem 20 wird ein in einem Ofen 21 einer Dampfreformierungsanlage erzeugtes heißen Fluid F, das ein Synthesegas (H₂ und CO) aufweist, aus den Reaktorrohren 22 des Ofens abgezogen. Der Ofen 21 kann mehrere solcher Reaktorrohre 22 aufweisen, die vorzugsweise parallel zueinander sowie bevorzugt vertikal in einem Ofenraum 23 des Ofens 21 verlaufen, wobei die Reaktorrohre 21 erhitzt werden, beispielsweise indem im Ofenraum 23 ein Brennstoff verbrannt wird. Hierdurch wird in den Reaktorrohren 22 eine für die Dampfreformation notwendige Hitze erzeugt, so dass Wasserdampf und ein Kohlenwasserstoff (z.B. CH4) in Gegenwart eines geeigneten Katalysators in dem jeweiligen Reaktorrohr 22 zu dem heißen, synthesegashaltigen Fluid F umgesetzt werden können.

Die Reaktorrohre 22 durchdringen nach unten hin eine horizontale Ofenwand 24 des Ofens 21 und sind jeweils über Rohrleitungsabschnitte 202, die eine äußere Oberfläche 201 a aufweisen, mit einem ersten Sammler 203 verbunden, der unterhalb des Ofens 21 vorzugsweise entlang der Horizontalen verläuft. Es können mehrere parallel zueinander verlaufende erste Sammler 203 vorhanden sein, die jeweils eine äußere Oberfläche 203a aufweisen. Die ersten Sammler 203 münden weiterhin in einen zweiten Sammler 204 (sogenannter cross collector) ein, der quer zu den ersten Sammlern 203 in der Horizontalen verläuft. Der zweite Sammler 204 weist ebenfalls eine äußere Oberfläche 204a auf.

Die Rohrleitungsabschnitte 202, die ersten Sammler 203 sowie der zweite Sammler 204 sind vorzugsweise zur Wärmeisolation mit einer Isolierung 201 ausgekleidet. Dadurch ist die Außentemperatur der Rohre 202, 203 und 204 entsprechend niedriger, so dass man von einem kalten Austrittssystem spricht (sogenanntes cold outlet manifold).

Zur Messung der Außentemperatur zumindest eines Bereiches des Reformeraustrittsystems 20, insbesondere der Rohrleitungsabschnitte 202, der ersten Sammler 203 und des zweiten Sammlers 204 sowie insbesondere zur Überwachung der Isolierung 201 in diesen Bereichen, ist erfindungsgemäß vorgesehen, einen Lichtwellenleiter 100, insbesondere in Form einer Glasfaser, auf bzw. an der Oberfläche 202a, 203a, 204a der entsprechenden Reformeraustrittsteile 202, 203, 204 anzubringen.

Gemäß Figur 1 kann der Lichtwellenleiter 100 dabei jeweils helikal um die Rohrleitungsabschnitte 202, die ersten Sammler 203 sowie den zweiten Sammler 204 gewickelt sein. Es ist natürlich auch möglich, lediglich einen beliebigen Abschnitt des Austrittsystems 20 zu messen.

Durch eine geeignete Befestigung des Lichtwellenleiters 100, die z.B. gemäß der Figuren 2 bis 4 vorgenommen werden kann, wird erreicht, dass der Lichtwellenleiter 100 in thermischen Kontakt mit den entsprechenden Oberfläche 202a, 203a bzw. 204a steht. Dadurch nimmt der Lichtwellenleiter 100 bzw. die Glasfaser 100 die jeweilige Oberflächentemperatur an. Mittels einer geeigneten Messtechnik (z.B. Distributed Temperature Sensing) kann durch Messung des Rückstreusignals (z.B. Raman-Effekt) eines (z.B. gepulsten) Lasers die Temperatur entlang des Lichtwellenleiters 100 gemessen werden. Hierzu wird auch auf die oben beschriebenen Messtechniken verwiesen.

Durch eine geeignete Lichtwellenleiter- bzw. Glasfasergeometrie längs des Reformeraustrittssystems 20 (z.B. Helix-Wicklung, siehe oben) kann die Außentemperatur bzw. Oberflächentemperatur mit entsprechender Auflösung kontinuierlich erfasst werden. Dazu wird vorzugsweise mit der bekannten Lichtwellenleiter- bzw. Glasfasergeometrie die gemessene Temperatur entlang des Lichtwellenleiters 100 in eine Temperaturverteilung auf der (dreidimensional geformten) Oberfläche 202a, 203a, 204a der entsprechenden Reformeraustrittssystemteile 202, 203, 204 umgerechnet.

Lokale Abweichungen der gemessenen Außentemperatur oberhalb einer definierten Grenze können dann als Hot Spots, d.h. Defekte der Isolierung 201 des Austrittssystems 20, erkannt werden.

Gemäß Figur 2 ist der Lichtwellenleiter 100 vorzugsweise in einer Metallhülse 101 angeordnet, die wiederum mittels eines Klebstoffes K auf die Oberfläche 200a der Rohrleitung 200 bzw. auf die Oberflächen 202a, 203a, 204a der entsprechenden Reformeraustrittssystemteile 202, 203, 204 geklebt ist.

Zusätzlich kann gemäß Figur 3 die Metallhülse 101 zum Schutz in einem Schlauch 102, insbesondere in Form eines Gewebeschlauches, geführt sein, der die Metallhülse 101 eng umschließt. In diesem Fall ist dann der Schlauch 102 mittels eines Klebstoffs K auf die Oberfläche 200a der Rohrleitung 200 bzw. auf die Oberflächen 202a, 203a, 204a der entsprechenden Reformeraustrittssystemsteile 202, 203, 204 geklebt.

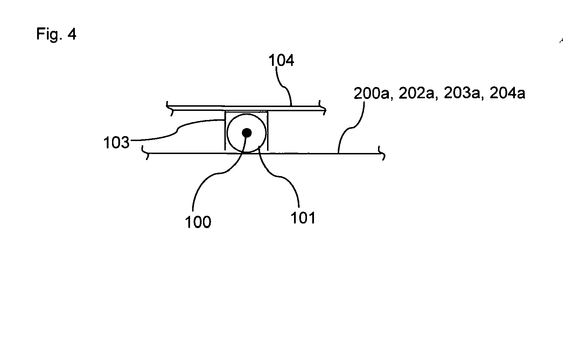

Figur 4 zeigt schließlich eine Möglichkeit einer klebstofffreien Fixierung des Lichtwellenleiters 100. Hierbei kann der Lichtwellenleiter 100 wiederum in einer Metallhülse 101 angeordnet sein, die gemäß Figur 4 zumindest abschnittsweise von Metallprofilen 103 überdeckt ist, die mit einer offenen Seite der jeweiligen Oberfläche 202a, 203a, 204a zugewandt sind und zusammen mit dieser den Lichtwellenleiter 100 (zumindest abschnittsweise) einhausen. Die Metallprofile 103 können dabei mit Spannmitteln 104, die z.B. den jeweiligen Reformeraustrittssystemteil 202, 203, 204 umgreifen, an der jeweiligen Oberfläche 202a, 203a, 204a festgelegt sein.

**Bezugszeichen**

| | |
|---|---|
| 1 | Anordnung |
| 20 | Reformeraustrittssystem |
| 21 | Ofen |
| 22 | Reaktorrohr |
| 23 | Ofenraum |
| 24 | Untere Ofenwand |
| 30 | Messeinrichtung |
| 100 | Lichtwellenleiter |
| 101 | Metallhülse |
| 102 | Schlauch |
| 103 | Metallprofil |
| 104 | Spannmittel |
| 200 | Rohrleitung |
| 200a | Äußere Oberfläche |
| 201 | Isolierung |
| 202 | Rohrleitungsabschnitt |
| 203 | Erster Sammler |
| 204 | Zweiter Sammler |
| 202a, 203a, 204a | Äußere Oberflächen |
| K | Klebstoff bzw. Klebstoffverbindung |
| F | Fluid, insbesondere aufweisend Synthesegas |

## Patentansprüche

1. Verfahren zum Messen einer Außentemperatur einer Rohrleitung (200), wobei ein Fluid (F) durch die Rohrleitung (200) strömt und wobei die Außentemperatur mittels eines entlang der Rohrleitung (200) verlaufenden Lichtwellenleiters (100), der in thermischen Kontakt mit einer äußeren Oberfläche (200a) der Rohrleitung (200) steht, gemessen wird, wobei Licht in den Lichtwellenleiter (100) eingekoppelt wird und im Lichtwellenleiter (100) gestreutes Licht zur Ermittlung der Außentemperatur ausgewertet wird.

2. Verfahren nach Anspruch 1, **dadurch gekennzeichnet, dass** der Lichtwellenleiter (100) zumindest abschnittsweise helikal um die Rohrleitung (200) gewickelt ist.

3. Verfahren nach Anspruch 1 oder 2, **dadurch gekennzeichnet, dass** mittels des Lichtwellenleiters (100) eine dreidimensionale Verteilung der Außentemperatur auf der Oberfläche (200a) der Rohrleitung (200) gemessen wird.

4. Verfahren nach einem der vorhergehenden Ansprüche, **dadurch gekennzeichnet, dass** die Rohrleitung (200) eine innenseitige Isolierung (201) aufweist.

5. Verfahren nach Anspruch 4, **dadurch gekennzeichnet, dass** die Außentemperatur oder die Verteilung der Außentemperatur gemessen wird, um die Isolierung (201) auf Schäden, insbesondere Risse, zu überwachen.

6. Verfahren nach einem der vorhergehenden Ansprüche, **dadurch gekennzeichnet, dass** die Rohrleitung (200) eine Rohrleitung eines Reformeraustrittssystems (20) ist, über das das Fluid (F), das vorzugsweise ein Synthesegas aufweist, aus zumindest einem Reaktorrohr (22) eines Ofens (21) abgezogen wird, wobei vorzugsweise das Synthesegas durch Dampfreformation in dem mindestens einen Reaktorrohr (22) erzeugt wurde.

7. Verfahren nach Anspruch 6, **dadurch gekennzeichnet dass** die Rohrleitung (200) eine oder mehrere der folgenden Komponenten aufweist:
- zumindest einen Rohrleitungsabschnitt (202), der das mindestens eine Reaktorrohr (22) des Ofens (21) mit einem ersten Sammler (203) des Reformeraustrittssystems (20) verbindet,
- einen ersten Sammler (203) des Reformeraustrittssystems (20), der vorzugweise mit dem mindestens einen Rohrleitungsabschnitt (202) verbunden ist,
- einen zweiten Sammler (204) des Reformeraustrittsystems (20), der vorzugsweise über den ersten Sammler (203) in Strömungsverbindung mit dem mindestens einen Reaktorrohr (22) oder dem mindestens einem Rohrleitungsabschnitt (202) steht.

8. Verfahren nach einem der vorhergehenden Ansprüche, **dadurch gekennzeichnet, dass** der Lichtwellenleiter (100) in einer Metallhülse (101) angeordnet ist, die den Lichtwellenleiter (100) im Querschnitt umgibt.

9. Verfahren nach Anspruch 8, **dadurch gekennzeichnet, dass** die Metallhülse (101) eine Wandung aufweist, die eine Dicke im Bereich von 0,2 mm bis 0,5 mm aufweist und/oder einen Außendurchmesser im Bereich von 2mm bis 3mm.

10. Verfahren nach einem der vorhergehenden Ansprüche, **dadurch gekennzeichnet, dass** die Metallhülse (101) in einem Schlauch (102), vorzugsweise in Form eines Gewebeschlauchs, geführt ist.

11. Verfahren nach einem der Ansprüche 8 bis 10, **dadurch gekennzeichnet, dass** die Metallhülse an der Oberfläche (200a) der Rohrleitung (200) mittels eines Klebstoffs (K) festgeklebt ist.

12. Verfahren nach Anspruch 10, **dadurch gekennzeichnet, dass** der Schlauch (102) an der Oberfläche (200a) der Rohrleitung (200) mittels eines Klebstoffs (K) festgeklebt ist.

13. Verfahren nach einem der vorhergehenden Ansprüche, **dadurch gekennzeichnet, dass** die Außentemperatur im Bereich von -50°C bis 700°C, vorzugsweise im Bereich von -50°C bis 350°C, liegt.

14. Anordnung (1) zum Messen einer Außentemperatur einer Rohrleitung (200), aufweisend:
- eine Rohrleitung (200), deren Außentemperatur zu messen ist,
- einen Lichtwellenleiter (100), vorzugsweise in Form einer Glasfaser, der entlang der Rohrleitung (200) verläuft, so dass er in thermischen Kontakt mit einer äußeren Oberfläche (200a) der Rohrleitung (200) steht,
- eine mit dem mindestens einen Lichtwellenleiter (100) verbundene Messeinrichtung (30), die dazu ausgebildet ist, Licht in den mindestens einen Lichtwellenleiter (100) einzukoppeln und in dem mindestens einen Lichtwellenleiter (100) gestreutes Licht zur Ermittlung der Außentemperatur auszuwerten.

15. Anordnung nach Anspruch 14, **dadurch gekennzeichnet, dass** der Lichtwellenleiter (100) zumindest abschnittsweise helikal um die Rohrleitung (200) gewickelt ist.
